# EUROPÄISCHE PATENTSCHRIFT

(11) **EP 0 592 447 B1**
(45) Veröffentlichungstag und Bekanntmachung des Hinweises auf die Patenterteilung: **25.06.1997**
(21) Anmeldenummer: 92905697.6
(22) Anmeldetag: 10.03.1992
(51) Int. Cl.: D21J 7/00

(54) **VERPACKUNGSSYSTEM, DÄMM-, ISOLIER- SOWIE TRÄGERPLATTE**
PACKAGING SYSTEM, SOUND INSULATING, INSULATING AND CARRIER PLATE
SYSTEME D'EMBALLAGE, PLAQUE D'INSONORISATION, D'ISOLATION ET DE SUPPORT

(43) Veröffentlichungstag der Anmeldung: 20.04.1994
(73) Patentinhaber: ULBRICHT, Charles, D-85640 Putzbrunn (DE)
(72) Erfinder: ULBRICHT, Charles, D-85640 Putzbrunn (DE)
(74) Vertreter: Petra, Elke, Dipl.-Ing.
(86) Internationale Anmeldenummer: DE9200200
(87) Internationale Veröffentlichungsnummer: WO9318230

(56) Entgegenhaltungen:
- WO-A-90/04679
- WO-A-91/11555
- DE-C- 885 347
- FR-A- 2 526 459
- GB-A- 708 393
- GB-A- 1 267 917

## Beschreibung

Im Baugewerbe werden Materialien zur Dämmung von Schall und Wärme sowie zur Isolierung verwendet. In der Verpackungsindustrie werden Materialien zur Verpackung von stoßempfindlichen Gütern verwendet (GB-A-708 393). Hierfür werden die verschiedensten Ausführungen und Formen aus Wellpappe, Kunststoffe sowie aus geschäumten Polystyrol verwendet. Vor allem Polystyrol weist bekanntlich den Nachteil auf, daß es unverrottbar ist und demnach den zeitgemäßen Anforderungen an Umweltverträglichkeit sowie Entsorgung nicht entspricht.

Im Hinblick auf die verpackungsspezifische Anforderung weist es gegenüber dem hier dargestellten Verpackungssystem den Nachteil auf, daß es nach einer aus Druck resultierenden Verformung nicht wieder in seine Ursprungsform zurückkehrt. Denselben Nachteil hat ebenso Wellpappe.

Der Erfindung liegt somit die Aufgabe zugrunde, ein System zur Verfügung zu stellen, welches folgende Kriterien in sich vereint:
a) Elastizität, d.h. nach Deformierung Rückkehr in seine Ursprungsform,
b) Umweltfreundlichkeit,
c) weitgehender Schutz des Verpackungsgutes,
d) Recyclingfähigkeit- demnach keine Umweltbelastung
e) Variabilität,
f) Herstellung aus Recycling-Materialien wie Holzschliff aus Altpapier, Recycling-Folien,
g) und erlaubt durch spez. Herstellungsverfahren die Fertigung von Endlosbahnen oder Einzelstücken.

Diese Aufgabe wird gelöst durch ein System für Dämm-, Isolier- und/oder Verpackungszwecke mit aus einer ebenen Fläche austretenden Auswölbungen in regelmäßiger Anordnung, wobei das Material aus aufgeschlossenem Altpapier und/oder Holzschliff bzw. Recyclingstoffen besteht und wobei an den Seitenwänden mindestens eine eingezogene Stufe mit parallel zur Grundfläche verlaufender Oberfläche angeordnet ist, bei dem wesentlich ist, daß die Auswölbung ab der Stufe als runder Kegelstumpf oder als eckiger Pyramidenstumpf ausgebildet ist und an den Ecken der Auswölbung Einzüge angeordnet sind.

Das System besteht somit aus Holzschliff und/oder aufgeschlossenem Altpapier bzw. aus Recyclingstoffen, wie sie beispielsweise zur Herstellung von Eierkartons verwendet werden. Demzufolge kann das System aus preiswerten Ausgangsstoffen nach dem Recycling-System gewonnen werden. Beim Aufschluß des Altpapiers brauchen keine De-inking-Verfahren angewendet werden, vielmehr werden lediglich Papierabfälle und/oder Altpapier aufgelöst, von nicht als Papierstoff (Cellulose) anzusehenden festen Verunreinigungen befreit, gegebenenfalls mit üblichen Leimungsmitteln, Retensionshilfsmitteln und/oder üblichen Hilfsmitteln zur Herstellung von Papierbahnen versetzt und verformt.

Ein wesentliches Merkmal stellen die besonders gestalteten Auswölbungen dar. Sie weisen einen eckigen Querschnitt auf, der vier-, sechs- oder achteckig sein kann, wobei eine regelmäßige eckige Form, insbesondere eine quadratische Form bevorzugt wird. Die Seitenwände verlaufen konisch und bilden vorzugsweise einen Kegelstumpf. Der Neigungswinkel der konisch verlaufenden Seitenwände beträgt mindestens 45°, vorzugsweise etwa 60°.

Als besonderes Merkmal ist bei vorliegender Erfindung die Ausbildung der Seitenwände dieser kegelstumpfförmigen Auswölbungen anzusehen. Die Seiten weisen mindestens eine Stufe mit parallel zur Grundfläche verlaufender Oberfläche auf. In der Regel genügt die Anordnung einer Stufe, doch können auch für Zwecke, bei denen eine besonders hohe Elastizität verlangt wird, zwei oder sogar drei Stufen vorgesehen sein. Weiterhin ist es vorteilhaft, wenn die Breite der Oberfläche der Stufe weitgehend der Höhe der Seitenwände von der Grundfläche bis zum Beginn der Stufe entspricht.

Bei einer weiteren Ausgestaltung der Auswölbungen können diese auch oberhalb der letzten Stufe als Kugel segmente ausgebildet sein, wobei es vorteilhaft ist, wenn auf der Oberfläche des Kugelsegments Rippen angebracht sind, die von der Mitte der Oberfläche des Kugelsegments zu den Ecken der Stufenoberfläche verlaufen.

Für besondere Zwecke können die Auswölbungen auch so gestaltet sein, daß bei einem vier- oder achteckigen Grundriß zwei jeweils gegenüberliegende Seiten eingezogen sind.

Diese Einzüge können ebenfalls eckig oder auch bogenförmig verlaufend sein. Für weitere Zwecke können die Auswölbungen auch in Form eines Kegelstumpfes sowie weiterer geometrischer Formgebungen gestaltet sein.

Des weiteren ist nach einer bevorzugten Ausführungsform vorgesehen, daß das System zwischen den Auswölbungen Schwächungslinien, Falzlinien und/oder Perforationen aufweist. Dadurch kann das System in Endlosbahnen oder für Einzelverpackungen gefertigt werden und in beliebig große Stücke geteilt und sowohl oval, rund oder eckig geformt werden.

Durch die Anordnung mindestens einer Stufe wird der Auswölbung eine besonders günstige elastische Eigenschaft verliehen, die gestattet, daß nach Aufhebung des auf die Auswölbung ausgeübten Druckes die Auswölbung wieder in die Ausgangslage zurückkehrt. Dadurch kommt dem Material nach der Erfindung ein höher Gebrauchswert zu. Das Material eignet sich daher besonders zu Verpackungszwecken, um Güter vor wiederholten Druckbelastungen, wie Stößen, zuverlässig zu schützen. Durch die regelmäßige Anordnung der Auswölbungen läßt sich das Material auch sehr raumsparend lagern, kann zu Rollen geformt und in dieser Form in einfacher Weise festgelegt werden und kann ferner auch zu Zwischenlagen im Baugewerbe verfertigt werden, indem zwei Bögen des Materials mit ihren jeweiligen Oberflächen vereinigt werden. Im letztgenannten Fall ist es vorteilhaft, wenn die Unterseite Altpapier, kaschiert ist.

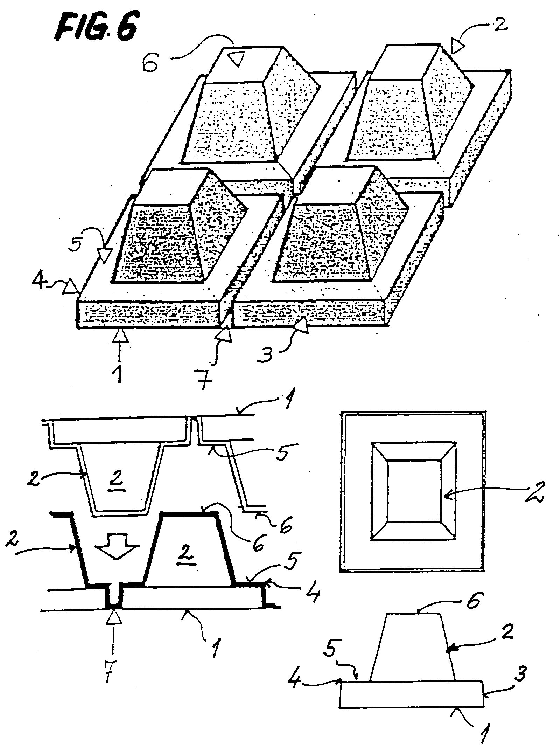

Praxisbezogen hat dieses System durch seine systematische, logische Anordnung der Formteile zur Folge, daß diese zueinander formschlüssig einrasten (siehe Fig. 6). Bei Verpackung unterschiedlicher Produkte ist zu deren Stabilisierung lediglich die Anordnung einzelner "Stützpunkte" im immer wiederkehrenden Rastersystem notwendig. Ein Einrasten zueinander ist demnach nicht nur bei vollflächiger Anordnung der Formteile möglich, sondern auch bei nur punktweiser Anordnung (siehe Fig. 9).

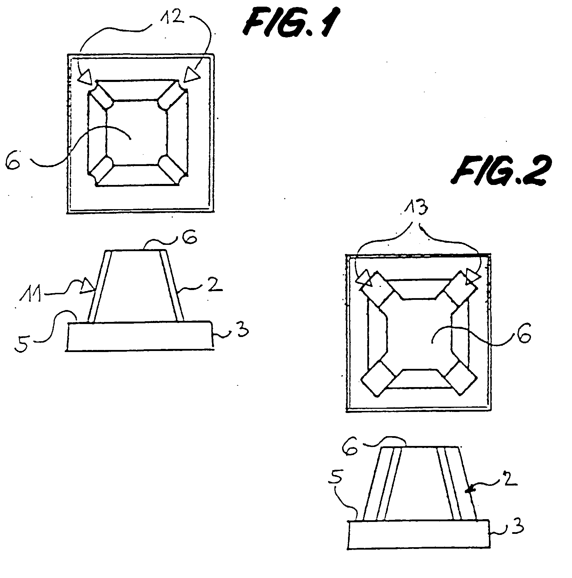

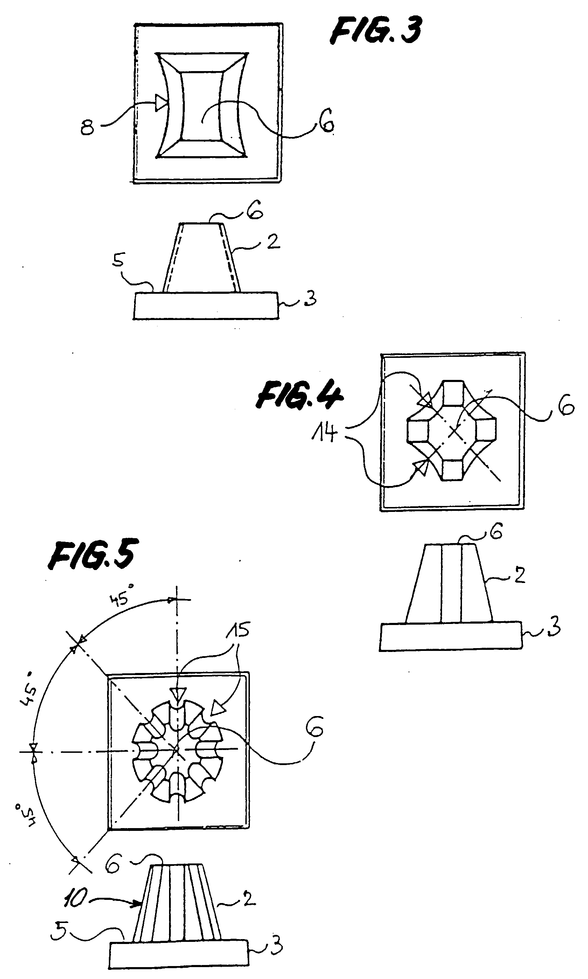

Für alle vorgenannten Formen gilt, daß diese von der Sockelfläche ab, auf einem konisch verlaufenden Sockel ruhen und ab diesem die unterschiedlichen Formen aufweisen. Statisch hohe Druckansprüche erfüllen vor allen Dingen die unter Fig. 1 - 5 abgebildeten Formen. Dies resultiert aus der systematischen Formgebung, basierend auf einem quadratischen Sockel, auf welchem die stumpfförmige Pyramide aufgebaut ist. Diese wird entlang der konischen Seitenlänge am Eck eingezogen. Der Neigungswinkel der Seitenflächen beträgt 45° bis 80°.

Das System zeichnet sich dadurch aus, daß dieses aus einer Vielzahl von Recycling-Materialien hergestellt werden kann und immer wieder zueinander einrastet, auch bei Kombination von unterschiedlichen Materialien.

Das System zeichnet sich durch seine vielfältigen Anwendungsbereiche nicht nur in der Verpackungsindustrie aus, sondern findet weitere Einsatzgebiete in der Möbelindustrie. Hier vor allem als Kernschicht zur beidseitigen Aufnahme von unterschiedlichen Materialien (Hartfaserplatten etc.).

Das erfindungsgemäße System zeichnet sich weiters dadurch aus, daß es als Wärmedämm-, Isolier- und Schallschutzelement Einsatz findet (Holzschliff), und außerdem als Trockenbauelement verwendet wird. Hier wird besonders dessen manigfaltige Verwendung erwähnt.

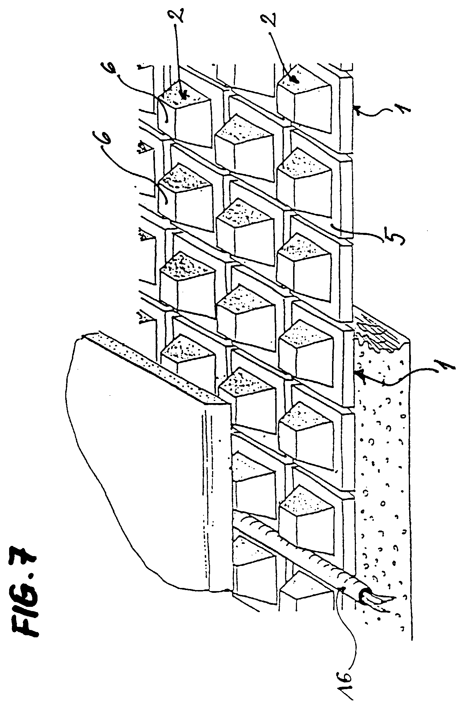

Das System, hier als Trägerplatte für die unterschiedlichsten Einsatzgebiete verwendet, wird ein- oder zweiseitig, je nach Anforderung, beschichtet. Durch die konische Anordnung der Formteile des Systems, verbleiben konische Hohlraumgassen. Durch diese können z.B. Elektroleitungen o.ä. geführt werden (siehe Fig. 7).

In Kombination mit aus diesem System erstellten Dämm-bzw. Isolierplatten kann somit auch die Führung von Fußbodenheizschlangen vorgenommen werden.

Das erfindungsgemäße System zeichnet sich weiters dadurch aus, daß es im Hochbau als Wärmedämmplatte mit Hinterlüftung Einsatz findet. Durch das Tränken mit bituminöser Flüssigkeit findet es ebenso unter Erdreich wie auch als Drain-Platte Anwendung.

Das System zeichnet sich weiters dadurch aus, daß es bei ein- und/oder zweiseitiger Anbringung einer planebenen Deckschicht, z.B. aus Gipskarton, Zement, Hertfaserplatte u.v.m.. als Trägerplatte im gesamten Bau- und Ausbaugewerbe Verwendung findet.

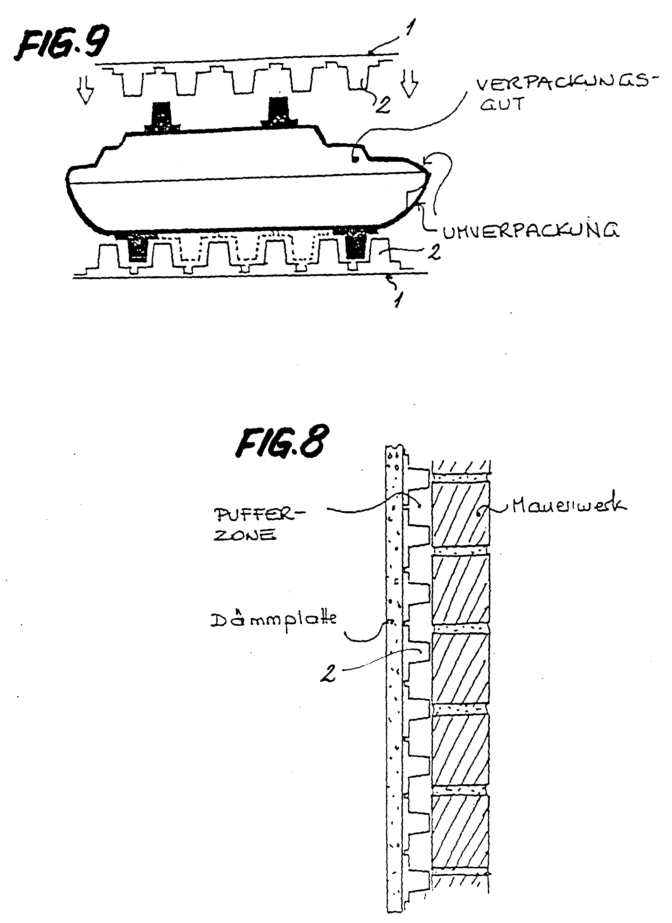

Bei Isclierung von Mauerwerk ist es besonders wichtig, die Schwitz- bzw. Kondensatwasserbildung am Mauerwerk zu verhindern. Im Baugewerbe werden für Vollwärmeschutzmaßnahmen vorwiegend Hartschaumplatten verwendet. Diese aus Polystyrol geschäumten Platten weisen glatte Vorder- und Rückseiten auf und sind nicht atmungsaktiv. Diese Platten liegen am Mauerwerk an und gestatten somit keine Luftzirkulation. Bei Anwendungsbeispiel nach Figur 8 liegt die Platte des Systems mit seinen stumpfförmigen Auswölbungen am Mauerwerk an. Die Hohlräume zwischen den Auswölbungen ergeben hier einen Wärmepuffer.

Beim Anwendungsbeispiel nach Figur 8 ergeben die Hohlräume zwischen den Auswölbungen, nach Erfordernis in Verbindung mehrerer Platten des Systems, eine Schall- und Wärmedämmung.

Das System kann mit Gittergewebe kaschiert werden und findet somit einen weiteren Einsatzbereich als Putzträger.

In der Zeichnung sindbevorzugte Ausführungsformen nach der Erfindung dargestellt.
- Fig. 1:: zeigt im Grund- und Aufriß eine Auswölbung mit viereckigem Kegelstumpf an dessen Ecken Einzüge verlaufen.
- Fig. 2:: zeigt im Grund- und Aufriß eine Auswölbung mit viereckigem Kegelstumpf, an dessen Ecken je eine nach außen vortretende, quadratische Erweiterung der Grundform vorhanden ist, welche parallel mit den Seitenflächen konisch nach oben verläuft.
- Fig. 3:: zeigt im Grund- und Aufriß eine Auswölbung, bei der zwei gegenüberliegende Seitenwände bogenförmig eingezogen sind.
- Fig. 4:: zeigt im Grund- und Aufriß eine Auswölbung mit kugelstumpfförmiger Grundform, bei der alle 4 axial gegenüberliegenden Flächen bogenförmig eingezogen sind.
- Fig. 5:: zeigt im Grund- und Aufriß eine Auswölbung mit rundem Kegelstumpf, der jeweils nach 45° eingezogen ist.
- Fig. 6:: zeigt in perspektivischer Ansicht das System mit vier kugelstumpfförmigen Auswölbungen, in Grund- und Aufriß das System mit kegelstumpfförmiger Auswölbung sowie in Schnittdarstellung das System mit kegelstumpfförmiger Auswölbung mit der Darstellung aus 2 gegenüberliegenden Bahnen des Systems, dessen Kegelstümpfe in den Raum zwischen dem gegenüberliegenden Kegelstumpf passen und/oder kraftschlüssig eingreifen.
- Fig. 7:: zeigt in perspektivischer Ansicht das System als Kern mit unterschiedlichen Beschichtungen, dargestellt als Trägerplatte, durch dessen Zwischenräume z.B. wie hier dargestellt (16) Elektrokabel gezogen werden.
- Fig. 8:: zeigt einen Schnitt durch das System als Schall- und Wärmedämmung an einem Mauerwerk.
- Fig. 9:: zeigt eine Seitenansicht des Systems als Verpackungssystem mit einzelmen "Stützpunkten".

Nach der Fig. 6 ragen aus der Grundfläche 1 vier Auswölbungen 2 hervor. Die Auswölbungen 2 haben eine quadratische Form und konisch verlaufende Seitenwände 3, die an der Oberkante 4 in eine Stufe 5 übergehen, deren Oberfläche parallel zur Grundfläche 1 verläuft. Die Oberfläche 6 des Kegelstumpfes 11 ist ebenfalls quadratisch.

Bei der Einwirkung von Druck auf die Oberfläche 6 des Kegelstumpfes drückt der Kegelstumpf die Oberfläche der Stufe 5 in Richtung auf die Grundfläche 1, federt aber bei Druckentlastung wieder in die Ausgangsstellung zurück.

Zwischen zwei Auswölbungen 2 ist eine Schwächungslinie 7 angeordnet, die Perforationen aufweist.

Abstand und Höhe der Auswölbungen 2 sind vorzugsweise so gestaltet, daß eine auf die Oberfläche 6 einer Bahn des Materials gelegte zweite Bahn des Materials mit seinen Kegelstümpfen in den Raum zwischen vier Kegelstümpfen passend und/oder kraftschlüssig eingreifen kann (siehe Fig. 6).

## Patentansprüche

1. Verpackungssystem, Dämm-, Isolier- sowie Trägerplatte mit aus einer ebenen Fläche austretenden Auswölbungen (2) in regelmäßiger Anordnung, wobei das Material aus aufgeschlossenem Altpapier und/oder Holzschliff bzw. Recyclingstoffen besteht und wobei an den Seitenwänden mindestens eine eingezogene Stufe mit parallel zur Grundfläche verlaufender Oberfläche angeordnet ist, dadurch gekennzeichnet, daß die Auswölbung (2) ab der Stufe (5) als runder Kegelstumpf (10) oder als eckiger Pyramidenstumpf (11) ausgebildet ist und an den Ecken der Auswölbung (2) Einzüge (12) angeordnet sind.

2. Verpackungssystem, Dämm-, Isolier- sowie Trägerplatte nach Anspruch 1, dadurch gekennzeichet, daß am Kreisumfang der als runder Kegelstumpf (10) ausgebildeten Auswölbung (2) jeweils um 45° versetzte Einzüge (15) angeordnet sind.

3. Verpackungssystem, Dämm-, Isolier- sowie Trägerplatte nach Anspruch 1 und 2, dadurch gekennzeichnet, daß zwischen zwei Auswölbungen (2) Falz- oder Perforierlinien (7) angeordnet werden.

4. Verpackungssystem, Dämm-, Isolier- sowie Trägerplatte nach den Ansprüchen 1 bis 3, dadurch gekennzeichnet, daß über den Falzlinien (7) zwischen den Auswölbungen (2) Heiz- oder Leerrohre (16) angeordnet sind.

5. Verpackungssystem, Dämm-, Isolier- sowie Trägerplatte nach den Ansprüchen 1 bis 4, dadurch gekennzeichnet, daß eine oder mehrere ineinander einrastende Trägerplatten (1) an einer senkrechten oder waagerechten Mauerfläche angeordnet sind wobei das zwischen Mauerfläche und Auswölbungen (2) eingeschlossene Luftvolumen eine Schall- und Wärmeisolierung ergibt.

## Claims

1. Packaging system, absorbing, insulating and supporting sheet with bulges (2) emerging from a flat surface in a regular arrangement, wherein the material consists of repulped old paper and/or mechanical wood pulp or recycled substances and wherein at least one recessed step with a surface running parallel to the base surface is disposed on the side walls, characterised in that from the step (5) the bulge (2) is embodied as a round truncated cone (10) or as an angular truncated pyramid (11) and recesses (12) are disposed at the corners of the bulge (2).

2. Packaging system, absorbing, insulating and supporting sheet according to claim 1, characterised in that recesses (15) offset in each case by 45° are disposed on the circumference of the bulge (2) embodied as a round truncated cone (10).

3. Packaging system, absorbing, insulating and supporting sheet according to claim 1 and 2,
characterised in that folding or perforating lines (7) are disposed between two bulges (2).

4. Packaging system, absorbing, insulating and supporting sheet according to claims 1 to 3,
characterised in that heating or empty pipes (16) are disposed over the folding lines (7) between the bulges (2).

5. Packaging system, absorbing, insulating and supporting sheet according to claims 1 to 4,
characterised in that one or more interlocking supporting sheets (1) are disposed on a vertical or horizontal wall surface, and the volume of air enclosed between the wall surface and the bulges (2) produces sound and heat insulation.

## Revendications

1. Système d'emballage, plaque d'insonorisation, d'isolation, ainsi que de support, qui comporte des moulures (2) régulièrement disposées, faisant saillie d'une surface plane, le matériau étant du papier de récupération désagrégé et/ou de la pâte mécanique et/ou des matières recyclées et au moins un palier (5) renfoncé étant ménagé sur les parois latérales en ayant une surface s'étendant parallèlement à la surface de base, caractérisé en ce que la moulure (2) est conformée en cône (10) tronqué circulaire ou en pyramide (11) tronquée polygonale et en ce qu'il est ménagé des renfoncements (12) aux sommets de la moulure (2).

2. Système d'emballage, plaque d'insonorisation, d'isolation ainsi que de support suivant la revendication 1, caractérisé en ce qu'il est ménagé sur la circonférence de la moulure (2) conformée en cône (10) tronqué circulaire des renfoncements (15) décalés de 45°.

3. Système d'emballage, plaque d'insonorisation, d'isolation ainsi que de support suivant la revendication 1 et 2, caractérisé en ce qu'il est ménagé des lignes (7) de pliage et/ou de perforations entre deux moulures (2).

4. Système d'emballage, plaque d'insonorisation, d'isolation ainsi que de support suivant les revendication 1 à 3, caractérisé en ce qu'il est monté des tuyaux (16) chauffants ou des tuyaux vides entre les moulures (2), sur les lignes (7) de pliage.

5. Système d'emballage, plaque d'insonorisation, d'isolation ainsi que de support suivant les revendication 1 à 4, caractérisé en ce qu'une plaque de support ou plusieurs plaques de supports s'encliquetant les uns avec les autres sont montés sur une surface de maçonnerie verticale ou horizontale, le volume d'air compris entre la surface de maçonnerie et les moulures (2) donnant une insonorisation et un calorifugeage.
